# FASCICULE DE BREVET EUROPEEN

(11) **EP 2 558 321 B1**
(45) Date de publication et mention de la délivrance du brevet: **11.03.2015**
(21) Numéro de dépôt: 11718461.4
(22) Date de dépôt: 07.04.2011
(51) Int. Cl.: B60K 23/08

(54) **PROCEDE ET DISPOSITIF DE DISTRIBUTION D'UN COUPLE MOTEUR ENTRE DEUX TRAINS DE ROUES D'UN VEHICULE A MOTEUR**
VERFAHREN UND VORRICHTUNG ZUR VERTEILUNG EINES MOTORDREHMOMENTS AUF ZWEI REIFENSÄTZE EINES KRAFTFAHRZEUGES
METHOD AND DEVICE FOR DISTRIBUTING AN ENGINE TORQUE BETWEEN TWO WHEEL SETS OF A MOTOR VEHICLE

(30) Priorité: 12.04.2010 FR 1052773
(43) Date de publication de la demande: 20.02.2013
(73) Titulaire: Renault S.A.S., 92100 Boulogne-Billancourt (FR)
(72) Inventeur: BOUTRON, Olivier, F-27940 Aubevoye (FR); FEBRER, Pascal, F-75014 Paris (FR); FOUSSARD, François, F-76100 Rouen (FR); ROMANI, Nicolas, F-75016 Paris (FR)
(86) Numéro de dépôt international: PCT/FR2011/050785
(87) Numéro de publication internationale: WO 2011/128559

(56) Documents cités:
- EP-A2- 1 188 596
- US-A1- 2004 222 029
- US-B1- 6 213 242

## Description

### DOMAINE TECHNIQUE DE L'INVENTION

L'invention concerne la distribution d'un couple moteur entre un premier train de roues et un deuxième train de roues d'un véhicule à moteur à au moins deux trains de roues motrices, que l'on appellera par la suite arbitrairement train avant et train arrière. Elle concerne notamment la distribution du couple moteur entre le train avant et le train arrière d'un véhicule à quatre roues motrices. En particulier mais de façon non limitative, l'invention concerne la distribution d'un couple moteur d'un train principal, toujours entrainé, à un train secondaire, entrainé de façon intermittente ou tout au moins dans de moindres proportions que le train principal, par exemple d'un train avant vers le train arrière d'un véhicule automobile à quatre roues motrices.

### ETAT DE LA TECHNIQUE ANTERIEURE

Les véhicules ayant quatre roues motrices au moins, appelés également véhicules tout-terrain, sont destinés à franchir des obstacles de toutes sortes et offrent pour ce faire une motricité adaptée aux conditions de déplacement du véhicule. Lorsque le véhicule est en mode tout-terrain, les conditions de déplacement du véhicule sont contraignantes et la vitesse du véhicule est alors faible ou moyenne.

Lorsque le véhicule est également destiné à des parcours routiers, il est intéressant que le conducteur puisse choisir entre au moins deux, voire trois modes de fonctionnement, qui peuvent être par exemple un mode de fonctionnement à un train de roues motrices, un mode de fonctionnement routier à au moins deux trains de roues motrices dans lequel le rapport entre le couple transmis au train avant et le couple transmis au train arrière varie en fonction de paramètres représentatifs du comportement routier du véhicule (par exemple vitesse du véhicule, vitesse des roues, position de la pédale d'accélérateur, angle du volant de direction, vitesse angulaire de lacet du véhicule) pour établir un compromis entre la stabilité du véhicule et la consommation, et un mode de fonctionnement tout-terrain privilégiant l'adhérence du véhicule au sol à faible vitesse.

Pour permettre au conducteur de choisir un mode de fonctionnement, le véhicule peut être pourvu d'un commutateur à plusieurs positions.

Dans le document EP 1 188 596 est décrit un véhicule pourvu d'un commutateur à trois positions, délivrant trois signaux distincts correspondant à un mode de fonctionnement à deux roues motrices, un mode de fonctionnement routier automatisé à quatre roues motrices et un mode de fonctionnement verrouillé à quatre roues motrices ou mode tout-terrain. Lorsque le conducteur tente d'activer le mode tout-terrain à une vitesse trop élevée, ce mode est inhibé et la commande reste dans le mode routier à quatre roues motrices.

### EXPOSE DE L'INVENTION

Un des buts de l'invention d'améliorer la commutation automatique entre un mode de commande tout-terrain et un mode de commande routier d'un répartiteur de couple entre deux trains de roues d'un véhicule à moteur.

Pour ce faire est proposé selon un premier aspect de l'invention un dispositif de distribution d'un couple moteur entre un premier train de roues et un deuxième train de roues d'un véhicule à moteur à au moins deux trains de roues motrices, comportant :
- un commutateur manuel de mode de distribution, mobile entre au moins une première position stable et une deuxième position instable, le commutateur étant rappelé mécaniquement de la deuxième position instable vers la première position stable en l'absence de sollicitation par le conducteur, le commutateur délivrant un signal transitoire de sélection d'un mode tout-terrain en passant de la première à la deuxième position,
- un répartiteur de couple pour distribuer le couple moteur entre le premier train de roues et le deuxième train de roues, en fonction d'une consigne de distribution de couple,
- des moyens d'élaboration de la consigne de distribution de couple en fonction au moins des mouvements du commutateur et de la vitesse du véhicule, comportant :
- des moyens de détermination d'une première valeur de consigne de distribution de couple,
- des moyens de détermination d'une deuxième valeur de consigne de distribution du couple, et
- des moyens de sélection pour sélectionner la première valeur de consigne ou la deuxième valeur de consigne comme consigne de distribution de couple, les moyens de sélection passant de la première valeur de consigne à la deuxième valeur de consigne au moins lorsque le commutateur délivre le signal de sélection du mode tout-terrain alors que la vitesse du véhicule est inférieure à un seuil prédéterminé de passage en mode tout-terrain, les moyens de sélection passant de la deuxième valeur de consigne à la première valeur de consigne au moins lorsque la vitesse du véhicule dépasse un seuil prédéterminé de vitesse maximale en mode tout-terrain.

Ainsi, l'activation du mode tout-terrain est manuelle alors que le retour en mode routier est automatisé au moins lorsque certaines conditions sont remplies. Naturellement, le seuil prédéterminé de passage en mode tout-terrain est inférieur ou égal au seuil prédéterminé de vitesse maximale en mode tout-terrain. Ces valeurs de seuil sont réglables lors de la mise au point en usine ou au garage, et sont sauvegardées dans une mémoire non volatile du véhicule.

On peut naturellement prévoir également un retour manuel du mode tout-terrain au mode routier, en prévoyant que les moyens de sélection passent de la deuxième valeur de consigne à la première valeur de consigne au moins lorsque le commutateur délivre le signal de sélection du mode tout-terrain.

Selon un mode de réalisation, les moyens d'élaboration de la consigne comportent un temporisateur actif lorsque l'alimentation électrique du véhicule est coupée alors que la deuxième valeur de consigne est sélectionnée, puis est rétablie après une durée d'arrêt T, pour sélectionner la deuxième valeur de consigne si la durée d'arrêt T est inférieure à une durée de temporisation T_{R}, et la première valeur de consigne sinon. La durée de temporisation est réglable lors de la mise au point en usine ou au garage, et sauvegardée dans une mémoire non volatile du véhicule. Elle est choisie supérieure au temps nécessaire pour démarrer le moteur après calage. Ainsi, il est possible de garder le mode tout-terrain activé après un calage intempestif.

Selon un mode de réalisation, les moyens de sélection sont tels que lorsque la consigne de distribution de couple est égale à la deuxième valeur de consigne et que la vitesse du véhicule reste supérieure à un seuil intermédiaire de vitesse en mode tout-terrain pendant une durée dépassant une durée prédéterminée, la première valeur de consigne est sélectionnée comme consigne de distribution de couple, le seuil intermédiaire étant inférieur au seuil prédéterminé de vitesse maximale en mode tout-terrain. Ainsi considère-t-on un parcours à une vitesse intermédiaire pendant une durée suffisante comme une indication que les conditions de conduite sont en fait des conditions routières.

Selon un mode de réalisation, la deuxième valeur de consigne est indépendante de la vitesse du véhicule. En pratique, le répartiteur de couple peut être verrouillé pour réaliser une transmission intégrale du couple.

Selon un mode de réalisation, la première valeur de consigne varie en fonction de paramètres incluant au moins la vitesse du véhicule.

Selon un mode de réalisation, le commutateur dans la première position délivre un signal permanent de sélection du mode routier. Le commutateur est mobile entre la première position et une troisième position stable, la première position étant située entre la deuxième et la troisième position, le commutateur dans la troisième position délivrant un signal permanent de sélection de mode à un train de roues motrices, les moyens d'élaboration de la consigne de distribution de couple comportant des moyens de détermination d'une troisième valeur de consigne de distribution du couple, et les moyens de sélection étant aptes à sélectionner la troisième valeur de consigne comme consigne de distribution de couple au moins lorsque le commutateur délivre le troisième signal de sélection.

Le commutateur fournit alors trois signaux distincts :
- un signal de sélection du mode à un train de roues motrices qui est permanent, au sens qu'il existe au moins tant que le commutateur se trouve dans la troisième position ;
- un signal de sélection du mode routier à deux trains de roues motrices, qui est également permanent, au sens qu'il existe au moins tant que le commutateur se trouve dans la première position ;
- un signal transitoire de sélection du mode tout-terrain et de retour vers le mode routier, qui n'est émis que de façon transitoire, par exemple sous forme d'une impulsion, lors de la séquence de passage du commutateur par la deuxième position instable de sélection du mode tout-terrain.

Préférentiellement, chaque signal est émis sur une voie de connexion particulière. Pour gérer les transitions entre les différentes positions du commutateur, il est prévu que le commutateur, lors de la transition entre la première position et la troisième position, passe par une zone de recouvrement dans laquelle le signal de sélection du mode routier et le signal de sélection du mode à un train de roues motrices sont présents simultanément. Pour la même raison, il est prévu que le signal de sélection du mode routier ne cesse pas d'être émis lorsque le commutateur est entrainé jusqu'à la deuxième position instable de sélection du mode tout-terrain et retourne à la première position de sélection du mode routier. Ainsi s'assure-t-on d'un suivi continu de la position du commutateur, sans zone d'ombre.

Selon un autre aspect de l'invention, celle-ci a trait à un procédé de distribution d'un couple moteur entre un premier train de roues et un deuxième train de roues d'un véhicule automobile à au moins deux trains de roues motrices pourvu d'un commutateur de mode mobile entre au moins une première position stable d'activation d'un premier mode de distribution du couple moteur et une deuxième position instable d'activation d'un deuxième mode de distribution du couple moteur pour un usage tout-terrain du véhicule, dans lequel lorsque le deuxième mode de distribution du couple moteur est activé le deuxième mode de distribution est conservé tant que l'une des conditions suivantes n'est pas remplie :
- la vitesse du véhicule dépasse une vitesse maximale en mode tout-terrain Vmax,
- la vitesse du véhicule dépasse un seuil vitesse intermédiaire en mode tout-terrain Vint et reste supérieur à ce seuil pendant un temps supérieur à une durée prédéterminée TT,
- l'alimentation électrique du véhicule est coupée pendant un temps supérieur à une temporisation déterminée TR.

### BREVE DESCRIPTION DES FIGURES

D'autres buts, caractéristiques et avantages de l'invention ressortiront à la lecture de la description qui suit, donnée uniquement à titre d'exemple non limitatif, et faite en référence aux planches de dessins annexées, sur lesquelles :
- la figure 1 illustre schématiquement un dispositif de distribution d'un couple moteur d'un véhicule automobile ;
- la figure 2 illustre schématiquement un mode de réalisation des moyens d'élaboration d'une consigne de distribution de couple ;

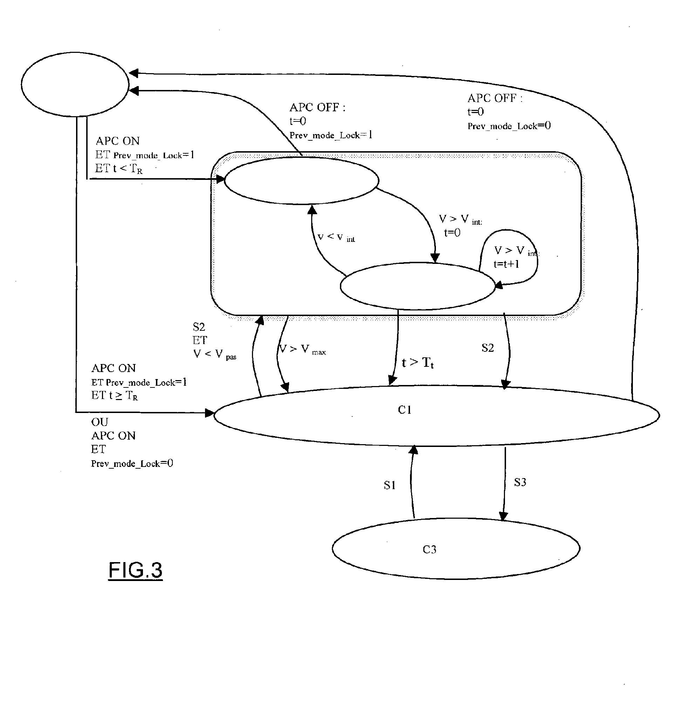

- la figure 3 illustre schématiquement un procédé de sélection d'une consigne de distribution du couple.

Pour plus de clarté, les éléments identiques ou similaires sont repérés par des signes de référence identiques sur l'ensemble des figures.

### DESCRIPTION DETAILLEE D'UN MODE DE REALISATION

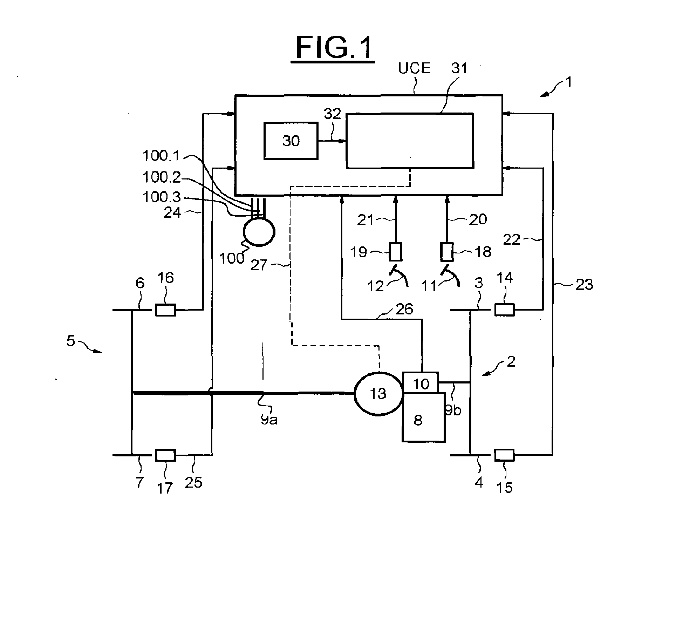

Sur la figure 1, on a représenté un dispositif de distribution 1 d'un couple moteur d'un véhicule automobile. Le véhicule automobile comprend un train avant 2 sur lequel sont montées deux roues avant 3 et 4, un train arrière 5 sur lequel sont montées deux roues arrière 6 et 7, et une source de couple moteur 8 destinée à entraîner les roues 3, 4, 6 et 7 du véhicule automobile. Cette source de couple moteur 8 entraîne les roues arrière 6, 7 par un moyen de transmission arrière 9a et entraîne les roues avant 3, 4 par l'intermédiaire d'un moyen de transmission avant 9b. La source de couple moteur 8 peut être un moteur électrique, un moteur à combustion interne, ou une solution hybride. Le véhicule automobile comprend en outre une boîte de vitesses 10 pour transmettre le couple moteur aux roues 3, 4, 6 et 7 du véhicule, une pédale d'accélérateur 11 et une pédale d'embrayage 12. On notera que la pédale d'embrayage 12 est optionnelle, en effet, le véhicule peut être équipé d'une boîte de vitesse automatisée et dans ce cas le véhicule ne comprend pas de pédale d'embrayage. Le couple est distribué par un répartiteur de couple 13 représenté ici de façon très schématique et qui peut être disposé en aval de la boîte de vitesse 10 ou intégré à celle-ci.

Le dispositif de distribution 1 comporte en outre un bouton commutateur manuel 100, à plusieurs positions indexées, à savoir :
- une première position stable, dite « quatre roues motrices-routier »,
- une deuxième position instable dite « quatre roues motrices - tout-terrain » et,
- le cas échéant une troisième position stable dite « deux roues motrices ».

La deuxième position est instable dans le sens où en l'absence de sollicitation par le conducteur, le commutateur revient automatiquement de la deuxième position à la première position sous la sollicitation d'un ressort de rappel.

Le commutateur est pourvu de trois connexions 100.1, 100.2, 100.3 délivrant respectivement trois signaux S1, S2 et S3. Dans la première position, le commutateur délivre le signal S1 uniquement. En passant de la première position à la deuxième position, le signal S1 continue à être émis, simultanément avec le signal S2. Dans la troisième position, le commutateur délivre le troisième signal S3 uniquement. Toutefois, il existe entre la première position à la troisième position une zone de recouvrement dans laquelle les signaux S1 et S3 sont simultanément présents. Ainsi est-il possible à tout moment de déterminer l'état du commutateur en fonction des signaux S1, S2 et S3.

Le signal S2 n'est émis que de manière transitoire, lorsque le commutateur passe dans la deuxième position avant d'être relâché.

Le dispositif de distribution 1 comprend une unité de commande électronique UCE, qui pilote le répartiteur de couple 13, et des capteurs de vitesse 14 à 17 destinés à mesurer respectivement la vitesse de chacune des roues 3, 4, 6 et 7 du véhicule automobile, ainsi que deux capteurs de position 18 et 19 pour mesurer respectivement les positions de la pédale d'accélérateur 11 et de la pédale d'embrayage 12.

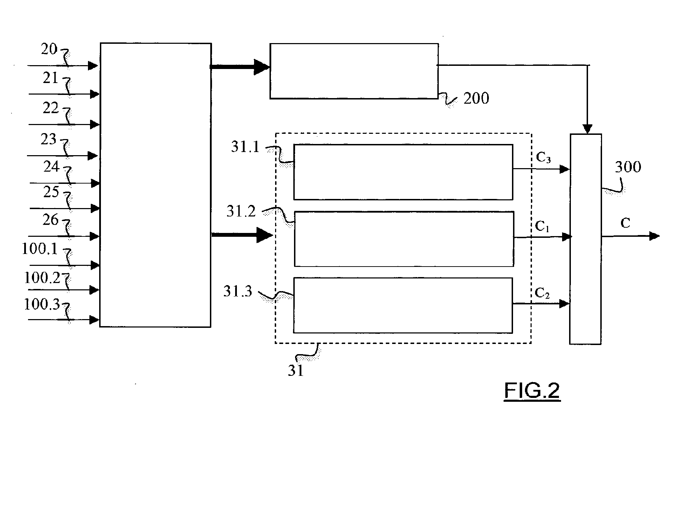

L'UCE, illustrée sur la figure 2 est configurée pour recevoir la position de la pédale d'accélérateur 11 émise depuis le capteur de position 18 par une connexion 20, une position de la pédale d'embrayage 12 émise depuis le capteur de position 19 par une connexion 21, les vitesses des roues 3, 4, 6 et 7 émises respectivement par les capteurs de vitesse 14 à 17 et transmises respectivement par des connexions 22 à 25. L'UCE est en outre configurée pour recevoir l'information du rapport de vitesse engagé depuis la boîte de vitesses 10 via une connexion 26. L'UCE reçoit également les signaux S1, S2 et S3 du commutateur manuel 100 par l'intermédiaire des connexions 100.1, 100.2 et 100.3.

L'UCE permet d'élaborer une consigne de distribution de couple C en fonction des informations de vitesse, de position et de rapport engagé, cette consigne étant délivrée au répartiteur de couple. Par convention dans cet exposé, on considérera que seul le train avant du véhicule est entrainé lorsque la consigne de couple C est nulle, ce qui signifie dans ce cas que le couple transmis au train secondaire arrière est nul.

L'UCE comprend des moyens de calcul 30 pour calculer différentes informations à partir des informations reçues depuis les éléments du véhicule automobile et pour transmettre les informations calculées par un réseau filaire 32 vers des moyens d'élaboration 31 comportant des moyens d'élaboration 31.1 d'une consigne en mode routier C1, des moyens d'élaboration 31.2 d'une consigne en mode tout-terrain C2, et des moyens d'élaboration 31.3 d'une consigne en mode deux roues motrices C3. Ces trois valeurs de consigne C1, C2, C3 alimentent un bloc dédié à la génération d'une commande de transfert de couple lissé sans rupture C qui, hors des périodes transitoire, est égale à l'une des valeurs C1, C2, C3. C'est cette consigne C qui est délivrée par l'UCE au répartiteur de couple 13.

Les moyens d'élaboration 31.1 de la consigne en mode routier C1 tiennent compte essentiellement de la vitesse du véhicule V et de l'écart de vitesse Δω entre le train avant et le train arrière. Ils peuvent également tenir compte de la température θ du répartiteur de couple, qui peut être mesurée à l'aide d'un capteur de température ou estimée à partir de l'historique de l'écart de vitesse Δω, comme décrit par exemple dans la demande WO2010/007271. Les moyens d'élaboration 31.1 peuvent également être pourvus de moyens spécifiques pour optimiser la consigne au démarrage, comme décrit par exemple dans le document WO2009/095627. Les moyens d'élaboration 31.1 peuvent également être pourvus de moyens spécifiques pour optimiser la consigne dans les virages ou dans les situations de freinage, comme décrit dans la demande WO2007/138221.

Les moyens d'élaboration 31.2 de la consigne en mode tout-terrain C2 peuvent de manière simple imposer un rapport de transfert de couple constant entre le train avant et le train arrière. La stratégie peut toutefois être plus élaborée, comme proposée par exemple dans la demande FR 09/55718.

Les moyens d'élaboration 31.3 peuvent quant à eux délivrer une consigne C3=0, correspondant à une absence totale de transfert de couple, où une consigne non nulle mais faible, destinée à maintenir l'ensemble de la chaine cinématique de transmission 9a vers le train secondaire 5 en mouvement, tout en minimisant la consommation.

L'UCE est également pourvu de moyens de sélection 200 de la consigne appliquée, en fonction des mouvements du commutateur 100, de la vitesse du véhicule et de l'état de l'alimentation électrique du moteur APC. Lorsque le commutateur est dans la première position, l'UCE répond au premier signal S1 pour délivrer au répartiteur de couple la consigne de couple élaborée par le moyen d'élaboration 31.1. De façon similaire, lorsque le commutateur est dans la troisième position, l'UCE répond au troisième signal S1 pour délivrer au répartiteur de couple la consigne de couple élaborée par le moyen d'élaboration 31.3.

Lorsque, à partir de la première position, le commutateur est mû vers la deuxième position, l'UCE vérifie que la vitesse du véhicule est inférieure à un seuil prédéterminé Vₚₐₛ de vitesse de passage en mode tout-terrain et, dans l'affirmative, répond à la conjonction des signaux S2 et S1 sélectionne la consigne C2 élaborée par le moyen d'élaboration 31.2 pour la délivrer au répartiteur de couple 13. Si par contre la vitesse du véhicule est supérieure au seuil de vitesse de passage en mode tout-terrain Vₚₐₛ, les moyens de sélection de la consigne C1 appliquée conservent la consigne élaborée par le moyen d'élaboration 31.1.

Lorsque les moyens de sélection 200 de la consigne appliquée ont choisi le mode tout-terrain et la consigne C2 élaborée par le moyen d'élaboration 31.2., cette consigne est conservée tant qu'une des trois conditions suivantes n'est pas remplie :
- la vitesse du véhicule dépasse une vitesse maximale en mode tout-terrain Vₘₐₓ ;
- la vitesse du véhicule dépasse un seuil vitesse intermédiaire en mode tout-terrain Vᵢₙₜ et reste supérieur à ce seuil pendant un temps supérieur à une durée prédéterminée T_{T} ;
- l'alimentation électrique du véhicule est coupée pendant un temps supérieur à une temporisation prédéterminée T_{R}.

Lorsque l'une des conditions est remplie, les moyens de sélection sélectionnent le mode routier et délivre au répartiteur de couple la consigne C1 du moyen d'élaboration 31.1. On comprend que la vitesse de passage en mode tout terrain Vₚₐₛ est inférieure à la vitesse maximale en mode tout terrain Vₘₐₓ. De même, la vitesse Vᵢₙₜ est inférieure à Vₘₐₓ. Ces trois valeurs de seuil sont déterminé lors de la mise au point et mémorisées dans une mémoire non volatile du véhicule.

La mémorisation du mode tout-terrain après coupure du contact d'alimentation électrique du véhicule pendant un temps donné permet, dans des conditions de conduite tout-terrain, de redémarrer en mode tout-terrain après avoir calé, ce qui peut arriver fréquemment dans des conditions de conduite difficiles. La temporisation T_{R} est donc choisie de façon à être supérieure au temps nécessaire pour que le conducteur redémarre le véhicule.

Le seuil intermédiaire de vitesse en mode tout-terrain Vᵢₙₜ sert quant à lui à limiter la consommation lorsque les conditions rencontrées par le véhicule s'apparentent plus à des conditions routières, quand bien même le véhicule roulerait à une vitesse inférieure à la vitesse maximale en mode tout-terrain Vₘₐₓ.

Naturellement, l'invention n'est pas réduite à l'exemple de réalisation illustré par les figures. L'invention trouve par exemple à s'appliquer à un véhicule dont le commutateur présente deux positions seulement, dont une stable et une instable, correspondant à deux modes de fonctionnement et deux stratégies d'élaboration de la consigne de couple. Il est également applicable lorsque plus de trois mode de fonctionnement sont envisagés.

L'invention est applicable à des véhicules à plus de deux trains de roues motrices. Chaque train de roues peut d'ailleurs avoir un nombre quelconque de roues, de préférence supérieur ou égal à deux.

## Revendications

1. Dispositif de distribution d'un couple moteur entre un premier train de roues (2) et un deuxième train de roues (5) d'un véhicule à moteur à au moins deux trains de roues motrices, comportant :
- un commutateur manuel de mode de distribution (100), mobile entre au moins une première position stable et une deuxième position instable, le commutateur étant rappelé mécaniquement de la deuxième position instable vers la première position stable en l'absence de sollicitation par le conducteur, le commutateur délivrant un signal transitoire (S₂) de sélection d'un mode tout-terrain en passant de la première à la deuxième position,
- un répartiteur de couple (13) pour distribuer le couple moteur entre le premier train de roues et le deuxième train de roues, en fonction d'une consigne de distribution de couple (C),
- des moyens d'élaboration (31) de la consigne de distribution de couple en fonction au moins des mouvements du commutateur et de la vitesse du véhicule, comportant :
- des moyens de détermination (31.1) d'une première valeur (C₁) de consigne de distribution du couple,
- des moyens de détermination (31.2) d'une deuxième valeur (C₂) de consigne de distribution du couple, et
- des moyens de sélection (200) pour sélectionner la première valeur de consigne (C₁) ou la deuxième valeur de consigne (C₂) comme consigne de distribution de couple, les moyens de sélection passant de la première valeur de consigne à la deuxième valeur de consigne au moins lorsque le commutateur délivre le signal de sélection du mode tout-terrain (S₂) alors que la vitesse du véhicule est inférieure à un seuil prédéterminé de passage en mode tout-terrain (Vₚₐₛ), les moyens de sélection passant de la deuxième valeur de consigne à la première valeur de consigne au moins lorsque la vitesse du véhicule dépasse un seuil prédéterminé de vitesse maximale en mode tout-terrain (Vₘₐₓ).

2. Dispositif de distribution selon la revendication 1, **caractérisé en ce que** les moyens d'élaboration de la consigne comportent un temporisateur activé lorsque l'alimentation électrique du véhicule est coupée alors que la deuxième valeur de consigne est sélectionnée, puis rétablie après une durée d'arrêt (T), pour sélectionner la deuxième valeur de consigne si la durée d'arrêt (T) est inférieure à une durée de temporisation (T_{R}), et la première valeur de consigne sinon.

3. Dispositif de distribution selon la revendication 2, **caractérisé en ce que** la durée de temporisation est supérieure au temps nécessaire pour démarrer le moteur après calage.

4. Dispositif de distribution selon l'une quelconque des revendications 1 à 3, **caractérisé en ce que** les moyens de sélection sont tels que lorsque la consigne de distribution de couple est égale à la deuxième valeur de consigne et que la vitesse du véhicule reste supérieure à un seuil de vitesse intermédiaire pendant une durée dépassant une durée prédéterminée (T_{T}), la première valeur de consigne est sélectionnée comme consigne de distribution de couple, le seuil de vitesse intermédiaire étant inférieur au seuil prédéterminé de vitesse maximale en mode tout-terrain.

5. Dispositif selon l'une quelconque des revendications 1 à 4, **caractérisé en ce que** le commutateur dans la première position délivre un signal permanent de sélection d'un mode automatique.

6. Dispositif selon la revendication 5, **caractérisé en ce que** le commutateur est mobile entre la première position et une troisième position stable, la première position étant située entre la deuxième et la troisième position, le commutateur dans la troisième position délivrant un signal permanent de sélection de mode à un train de roues motrices, les moyens d'élaboration de la consigne de distribution de couple comportant des moyens de détermination d'une troisième valeur de consigne de distribution du couple, et les moyens de sélection étant aptes à sélectionner la troisième valeur de consigne comme consigne de distribution de couple au moins lorsque le commutateur délivre le troisième signal de sélection.

7. Dispositif selon l'une quelconque des revendications 1 à 6, **caractérisé en ce que** la première valeur de consigne passe d'une valeur maximale à une valeur nulle lorsque la vitesse du véhicule augmente.

8. Dispositif selon l'une quelconque des revendications 1 à 7, **caractérisé en ce que** les moyens de sélection passent de la deuxième valeur de consigne à la première valeur de consigne au moins lorsque le commutateur délivre le signal de sélection du mode tout-terrain.

9. Procédé de distribution d'un couple moteur entre un premier train de roues et un deuxième train de roues d'un véhicule automobile à au moins deux trains de roues motrices pourvu d'un commutateur manuel de mode mobile entre au moins une première position stable d'activation d'un premier mode de distribution du couple moteur et une deuxième position instable d'activation d'un deuxième mode de distribution du couple moteur pour un usage tout-terrain du véhicule, dans lequel lorsque le deuxième mode de distribution du couple moteur est activé le deuxième mode de distribution est conservé tant que l'une des conditions suivantes n'est pas remplie :
- la vitesse du véhicule dépasse une vitesse maximale en mode tout-terrain (Vₘₐₓ),
- la vitesse du véhicule dépasse un seuil vitesse intermédiaire en mode tout-terrain (Vint) et reste supérieur à ce seuil pendant un temps supérieur à une durée prédéterminée (TT),
- l'alimentation électrique du véhicule est coupée pendant un temps supérieur à une temporisation déterminée (TR).

## Patentansprüche

1. Verfahren zur Verteilung eines Motordrehmoments zwischen einem ersten Reifensatz (2) und einem zweiten Reifensatz (5) eines Kraftfahrzeugs mit mindestens zwei Antriebsreifensätzen, umfassend:
- einen manuellen Umschalter des Verteilungsmodus (100), der zwischen einer ersten stabilen Position und einer zweiten instabilen Position beweglich ist, wobei der Umschalter mechanisch von der zweiten instabilen Position in die erste stabile Position zurückgestellt wird, wenn keine Belastung durch den Lenker vorhanden ist, wobei der Umschalter ein transitorisches Signal (S₂) zur Auswahl eines Geländemodus liefert, wobei er von der ersten in die zweite Position übergeht,
- einen Drehmomentverteiler (13), um das Motordrehmoment zwischen dem ersten Reifensatz und dem zweiten Reifensatz in Abhängigkeit von einem Drehmomentverteilungssollwert (C) zu verteilen,
- Mittel (31) zur Ausarbeitung des Drehmomentverteilungssollwerts zumindest in Abhängigkeit von Bewegungen des Umschalters und von der Geschwindigkeit des Fahrzeugs, umfassend:
- Mittel (31.1) zur Bestimmung eines ersten Drehmomentverteilungssollwerts (C₁),
- Mittel (31.2) zur Bestimmung eines zweiten Drehmomentverteilungssollwerts (C₂), und
- Auswahlmittel (200), um den ersten Sollwert (C₁) oder den zweiten Sollwert (C₂) als Drehmomentverteilungssollwert auszuwählen, wobei die Auswahlmittel vom ersten Sollwert auf den zweiten Sollwert zumindest dann übergehen, wenn der Umschalter das Auswahlsignal des Geländemodus (S₂) liefert, während die Geschwindigkeit des Fahrzeugs geringer als eine vorbestimmte Schwelle für den Übergang in den Geländemodus (Vₚₐₛ) ist, wobei die Auswahlmittel vom zweiten Sollwert in den ersten Sollwert zumindest dann übergehen, wenn die Geschwindigkeit des Fahrzeugs eine vorbestimmte Schwelle für die Maximalgeschwindigkeit im Geländemodus (Vₘₐₓ) überschreitet.

2. Verteilungsvorrichtung nach Anspruch 1, **dadurch gekennzeichnet, dass** die Mittel zur Ausarbeitung des Sollwerts eine Verzögerungsschaltung umfassen, die aktiviert wird, wenn die elektrische Versorgung des Fahrzeugs unterbrochen ist, während der zweite Sollwert ausgewählt wird, und dann nach einer Haltezeit (T) wieder hergestellt wird, um den zweiten Sollwert auszuwählen, wenn die Haltezeit (T) kürzer als eine Verzögerungszeit (T_{R}) ist, und andernfalls den ersten Sollwert.

3. Verteilungsvorrichtung nach Anspruch 2, **dadurch gekennzeichnet, dass** die Verzögerungszeit länger als die zum Starten des Motors nach dem Abschalten notwendige Zeit ist.

4. Verteilungsvorrichtung nach einem der Ansprüche 1 bis 3, **dadurch gekennzeichnet, dass** die Auswahlmittel derart sind, dass, wenn der Drehmomentverteilungssollwert gleich dem zweiten Sollwert ist und die Geschwindigkeit des Fahrzeugs über einer Zwischengeschwindigkeitsschwelle während einer Zeit, die eine vorbestimmte Zeit (T_{T}) überschreitet, bleibt, der erste Sollwert als Drehmomentverteilungssollwert ausgewählt wird, wobei die Zwischengeschwindigkeitsschwelle geringer als die vorbestimmte Maximalgeschwindigkeitsschwelle im Geländemodus ist.

5. Vorrichtung nach einem der Ansprüche 1 bis 4, **dadurch gekennzeichnet, dass** der Umschalter in der ersten Position ein permanentes Signal zur Auswahl eines Automatikmodus liefert.

6. Vorrichtung nach Anspruch 5, **dadurch gekennzeichnet, dass** der Umschalter zwischen der ersten Position und einer dritten stabilen Position beweglich ist, wobei sich die erste Position zwischen der zweiten und der dritten Position befindet, wobei der Umschalter in der dritten Position ein permanentes Signal zur Auswahl eines Modus an einen Antriebsreifensatz liefert, wobei die Mittel zur Ausarbeitung des Drehmomentverteilungssollwerts Mittel zur Bestimmung eines dritten Drehmomentverteilungssollwerts umfassen, und wobei die Auswahlmittel geeignet sind, den dritten Sollwert als Drehmomentverteilungssollwert zumindest dann auszuwählen, wenn der Umschalter das dritte Auswahlsignal liefert.

7. Vorrichtung nach einem der Ansprüche 1 bis 6, **dadurch gekennzeichnet, dass** der erste Sollwert von einem Maximalwert zu einem Wert gleich Null übergeht, wenn die Geschwindigkeit des Fahrzeugs höher wird.

8. Vorrichtung nach einem der Ansprüche 1 bis 7, **dadurch gekennzeichnet, dass** die Auswahlmittel von dem zweiten Sollwert zum ersten Sollwert zumindest dann übergehen, wenn der Umschalter das Auswahlsignal für den Geländemodus liefert.

9. Verfahren zur Verteilung eines Motordrehmoments zwischen einem ersten Reifensatz und einem zweiten Reifensatz eines Kraftfahrzeugs mit mindestens zwei Antriebsreifensätzen, versehen mit einem manuellen Modusumschalter, der zwischen mindestens einer ersten stabilen Position zur Aktivierung eines ersten Verteilungsmodus des Motordrehmoments und einer zweiten instabilen Position zur Aktivierung eines zweiten Verteilungsmodus des Motordrehmoments für eine Geländenutzung des Fahrzeugs beweglich ist, bei dem, wenn der zweite Verteilungsmodus des Motordrehmoments aktiviert ist, der zweite Verteilungsmodus beibehalten wird, solange die folgenden Bedingungen nicht erfüllt sind:
- die Geschwindigkeit des Fahrzeugs überschreitet eine Maximalgeschwindigkeit im Geländemodus (Vₘₐₓ),
- die Geschwindigkeit des Fahrzeugs überschreitet eine Zwischengeschwindigkeitsschwelle im Geländemodus (Vᵢₙₜ) und bleibt über dieser Schwelle während einer Zeitdauer größer als eine vorbestimmte Zeit (T_{T}),
- die elektrische Versorgung des Fahrzeugs ist während einer längeren Zeit als eine bestimmte Verzögerung (T_{R}) unterbrochen.

## Claims

1. Device for distributing an engine torque between a first wheel set (2) and a second wheel set (5) of an automobile vehicle with at least two drive wheel sets, comprising:
- a manual distribution mode selector switch (100), moveable between at least a first, stable, position and a second, unstable, position, the selector switch being mechanically returned from the second, unstable, position to the first, stable, position in the absence of any solicitation by the driver, the selector switch delivering a transient signal **(S₂)** for selection of an off-road mode when going from the first to the second position,
- a torque distributor (13) for distributing the engine torque between the first wheel set and the second wheel set, as a function of a torque distribution setpoint **(C),**
- means (31) for generating the torque distribution setpoint as a function of at least the movements of the selector switch and of the speed of the vehicle, comprising:
- means for determining (31.1) a first setpoint value **(C₁)** for distribution of the torque,
- means for determining (31.2) a second setpoint value **(C₂)** for distribution of the torque, and
- selection means (200) for selecting the first setpoint value **(C₁)** or the second setpoint value **(C₂)** as a torque distribution setpoint, the selection means going from the first setpoint value to the second setpoint value at least when the selector switch delivers the signal for selection of the off-road mode **(S₂)** while the speed of the vehicle is less than a predetermined threshold for engaging off-road mode (Vₚₐₛ), the selection means going from the second setpoint value to the first setpoint value at least when the speed of the vehicle exceeds a predetermined threshold for maximum speed in off-road mode (Vₘₐₓ).

2. Distribution device according to Claim 1, **characterized in that** the means for generating the setpoint comprise a timer activated when the electrical power supply of the vehicle is switched off while the second setpoint value is selected, then restarted after a stopped time (T), so as to select the second setpoint value if the stopped time (T) is less than a dwell time (T_{R}), and otherwise the first setpoint value.

3. Distribution device according to Claim 2, **characterized in that** the dwell time is greater than the time needed for restarting the engine after stalling.

4. Distribution device according to any one of Claims 1 to 3, **characterized in that** the selection means are such that when the torque distribution setpoint is equal to the second setpoint value and the speed of the vehicle remains higher than an intermediate speed threshold for a period of time exceeding a predetermined period (T_{T}), the first setpoint value is selected as torque distribution setpoint, the intermediate speed threshold being lower than the predetermined threshold for maximum speed in off-road mode.

5. Device according to any one of Claims 1 to 4, **characterized in that**, in the first position, the selector switch delivers a continuous signal for selection of an automatic mode.

6. Device according to Claim 5, **characterized in that** the selector switch is moveable between the first position and a third, stable, position, the first position being situated between the second and the third position, the selector switch in the third position delivering a continuous signal for selection of a mode with a single drive wheel set, the means for generating the torque distribution setpoint comprising means for determining a third setpoint value for distribution of the torque, and the selection means being capable of selecting the third setpoint value as torque distribution setpoint at least when the selector switch delivers the third selection signal.

7. Device according to any one of Claims 1 to 6, **characterized in that** the first setpoint value goes from a maximum value to a zero value when the speed of the vehicle increases.

8. Device according to any one of Claims 1 to 7, **characterized in that** the selection means go from the second setpoint value to the first setpoint value at least when the selector switch delivers the signal for selection of the off-road mode.

9. Method for distributing an engine torque between a first wheel set and a second wheel set of an automobile vehicle with at least two drive wheel sets equipped with a manual mode selector switch moveable between at least a first, stable, position for activation of a first mode of distribution of the engine torque and a second, unstable, position for activation of a second mode of distribution of the engine torque for an off-road use of the vehicle, in which when the second mode of distribution of the engine torque is activated the second distribution mode is conserved for as long as one of the following conditions has not been met:
- the speed of the vehicle exceeds a maximum speed in off-road mode (Vₘₐₓ);
- the speed of the vehicle exceeds an intermediate speed threshold in off-road mode (Vᵢₙₜ) and remains higher than this threshold for a period of time greater than a predetermined period (T_{T});
- the electrical power supply of the vehicle is switched off for a period of time greater than a predetermined dwell time (T_{R}).
